# EUROPÄISCHE PATENTSCHRIFT

(11) **EP 4 288 670 B1**
(45) Veröffentlichungstag und Bekanntmachung des Hinweises auf die Patenterteilung: **17.12.2025**
(21) Anmeldenummer: 22701236.6
(22) Anmeldetag: 20.01.2022
(51) Int. Cl.: F16B 5/02, B60K 1/00, B60L 50/20, B62M 6/40, H02K 5/26, B62K 19/34, B62M 6/55, F16B 43/00

(54) **ANTRIEBSANORDNUNG**
DRIVE ARRANGEMENT
AGENCEMENT D'ENTRAÎNEMENT

(30) Priorität: 04.02.2021 DE 102021201023
(43) Veröffentlichungstag der Anmeldung: 13.12.2023
(73) Patentinhaber: Robert Bosch GmbH, 70442 Stuttgart (DE)
(72) Erfinder: NGUYEN, Quoc-Dat, 72654 Neckartenzlingen (DE); BOOS, Paul, 72131 Ofterdingen (DE); BERTSCH, Benjamin, 72805 Lichtenstein (DE); BINDER, Julian, 72827 Wannweil (DE)
(86) Internationale Anmeldenummer: PCT/EP2022/051188
(87) Internationale Veröffentlichungsnummer: WO 2022/167224

(56) Entgegenhaltungen:
- WO-A1-2020/151889
- WO-A1-2022/043182
- DE-A1- 102017 201 617
- DE-A1- 19 835 695

## Beschreibung

### Stand der Technik

Die vorliegende Erfindung betrifft eine Antriebsanordnung, ein die Antriebsanordnung umfassendes Fahrzeug und ein Verfahren zur Montage einer Antriebsanordnung.

Bekannt sind Antriebsanordnungen mit zwischen zwei Wänden, beispielsweise eines Fahrzeugrahmens eines Fahrzeugs, gehaltenen Antriebseinheiten. Die Antriebseinheit wird mit den beiden gegenüberliegenden Wänden verschraubt. Üblicherweise ist dabei ein Spalt zwischen der Antriebseinheit und einer der Wände zu überbrücken. Um dies zu ermöglichen kann beispielsweise ein Halteblech an der Antriebseinheit vorgesehen sein, welches zum Überbrücken des Spalts elastisch verformt wird. Dies kann sich jedoch ungünstig auf die mechanische Belastung und die Dichtigkeit der Antriebsanordnung auswirken. Eine Antriebsanordnung des Standes der Technik ist in DE 10 2017 201617 A1 offenbart, wobei eine Halterung einer Antriebseinheit ein Toleranzausgleichselement in Form einer Gleitlagerung aufweist, die eine Beweglichkeit einer Schraube der Halterung in der Längsachse der Schraube ermöglicht. Beim Anziehen der Schraube, findet keine radiale Aufweitung des Toleranzausgleichselements statt.

### Offenbarung der Erfindung

Die erfindungsgemäße Antriebsanordnung mit den Merkmalen des Anspruchs 1 zeichnet sich demgegenüber dadurch aus, dass auf einfache Weise eine belastungstechnisch vorteilhafte Halterung einer Antriebseinheit innerhalb eines Rahmenschnittstelle bereitgestellt werden kann. Dies wird erreicht durch eine Antriebsanordnung, umfassend eine Antriebseinheit und eine Rahmenschnittstelle, wobei die Antriebseinheit zumindest teilweise zwischen einer ersten Wand und einer zweiten Wand der Rahmenschnittstelle angeordnet ist. Zudem umfasst die Antriebsanordnung eine erste Halterung und eine zweite Halterung. Die erste Halterung hält die Antriebseinheit dabei an der ersten Wand der Rahmenschnittstelle und die zweite Halterung hält die Antriebseinheit an der zweiten Wand der Rahmenschnittstelle. Die erste Halterung weist dabei eine Schraube und ein hülsenförmiges Toleranzausgleichselement auf. Das Toleranzausgleichselement ist zumindest teilweise innerhalb einer Wandöffnung der ersten Wand angeordnet und liegt dabei an der Antriebseinheit an. Mittels der Schraube ist das Toleranzausgleichselement mit der Antriebseinheit verschraubt. Insbesondere ragt die Schraube hierbei durch das Toleranzausgleichselement hindurch, insbesondere so, dass das Toleranzausgleichselement zwischen der Antriebseinheit und einem Schraubenkopf der Schraube eingeklemmt ist. Dabei ist das Toleranzausgleichselement so ausgebildet, um sich durch die Verschraubung radial aufzuweiten, derart, um sich durch die radiale Aufweitung zumindest teilweise an einer Innenseite der Wandöffnung anzulegen, wenn die Schraube mit einem vordefinierten Anzugsdrehmoment angezogen ist.

Mit anderen Worten erfolgt die Befestigung der Antriebseinheit an der ersten Wand mittels der ersten Halterung dadurch, dass das Toleranzausgleichselement sich durch die Verschraubung so deformiert, dass es sich radial aufspreizt, bis durch ein Anpressen an die Innenseite der Wandöffnung ein Kraftschluss hergestellt ist. Dieser Kraftschluss, also das Anliegen des aufgeweiteten Teils des Toleranzausgleichselements an der Innenseite der Wandöffnung ist insbesondere ein Kraftschluss in axialer Richtung, also entlang einer Schraubenachse der Schraube. Zusätzlich wird eine Beweglichkeit in radialer Richtung eingeschränkt dadurch, dass das aufgeweitete Toleranzausgleichselement um den gesamten Umfang der Wandöffnung anliegt. Mittels des Toleranzausgleichselements wird die Antriebseinheit somit zuverlässig und präzise positioniert indirekt an der ersten Wand befestigt.

Um die spezielle radiale Verformbarkeit des Toleranzausgleichselements zu ermöglichen, kann dieses auf vielfältige Weise ausgebildet sein. Beispielsweise kann das Toleranzausgleichselement eine spezielle Geometrie und/oder spezielle eingebrachte Strukturmerkmale, wie definierte Schlitze oder Nuten oder dergleichen, aufweisen, welche bei der Verschraubung gezielt die radiale Aufweitung des Toleranzausgleichselements bewirken. Alternativ wäre auch eine gleichmäßig ausgebildete, beispielsweise zumindest abschnittsweise zylindrische, Hülse möglich, welche sich durch die Verschraubung unkontrolliert verformt, wobei sich die Hülse beispielsweise durch die innerhalb befindliche Schraube nur nach radial außen verformen kann.

Vorzugsweise resultiert das radiale Aufweiten aus einer axialen Stauchung oder Verkürzung des Toleranzausgleichselements, insbesondere welche durch die Verschraubung mittels der Schraube herbeiführbar ist.

Insbesondere erfolgt das radiale Aufweiten in Form einer plastischen Verformung des Toleranzausgleichselements.

Besonders bevorzugt ist das Toleranzausgleichselement als ein einstückiges Bauteil ausgebildet.

Vorzugsweise wird ein zwischen der Antriebseinheit und der ersten Wand der Rahmenschnittstelle vorliegender Spalt, welcher beispielsweise aufgrund fertigungsbedingt unterschiedlicher Abmessungen der Antriebseinheit und eines durch die beiden Wände begrenzten Innenraums der Rahmenschnittstelle resultieren kann, durch das Toleranzausgleichselement kompensiert. Hierfür können Toleranzausgleichselement und Schraube zunächst locker in die Wandöffnung eingeführt und mit der Antriebseinheit verschraubt werden. Das Toleranzausgleichselement richtet sich somit an der Lage der Antriebseinheit aus. Durch definiertes Anziehen der Schraube mit dem Anzugsdrehmoment wird das Toleranzausgleichselement radial verformt, mindestens bis ein Teil davon die Innenseite der Wandöffnung berührt. Durch diesen Kontakt wird der Kraftschluss mit der Wandöffnung hergestellt, um die Befestigung der Antriebseinheit an der ersten Wand zu erhalten.

Die erste Wand und die zweite Wand der Rahmenschnittstelle sind vorzugsweise in einem vordefinierten festen Abstand zueinander angeordnet. Besonders bevorzugt ist die Rahmenschnittstelle zumindest teilweise U-förmig ausgebildet, insbesondere wobei die erste Wand und die zweite Wand parallel zueinander in dem vordefinierten festen Abstand angeordnet sind, und vorzugsweise mittels eines Verbindungsbereichs miteinander verbunden sind. Bevorzugt ist die Rahmenschnittstelle, also die erste Wand, die zweite Wand und der Verbindungsbereich, als einstückiges Bauteil ausgebildet.

Die Antriebsanordnung erlaubt einen hinsichtlich mechanischer Belastungen vorteilhaften Zusammenbau von Antriebseinheit und Rahmenschnittstelle. Mittels des Toleranzausgleichselements kann eine spielfreie Befestigung der Antriebseinheit zwischen den beiden Wänden sichergestellt werden, ohne dass beispielsweise bei einem beidseitigen Verschrauben der Antriebseinheit mit den beiden Wänden eine Biegebelastung und/oder eine Zugbelastung in einem der beteiligten Komponenten auftritt. Beispielsweise können dadurch besonders leichtgewichtige Werkstoffe für die Komponenten der Antriebsanordnung verwendet werden.

Die Unteransprüche haben bevorzugte Weiterbildungen der Erfindung zum Inhalt.

Bevorzugt weist eine Innenwand des Toleranzausgleichselements, wenn dieses in unverformtem Zustand vorliegt, einen konkaven Wandbereich auf. Als konkaver Wandbereich wird dabei zumindest ein Abschnitt der Innenwand angesehen, welcher im Längsschnitt des Toleranzausgleichselements gesehen nach radial außen gekrümmt ist. Vorzugsweise kann der konkave Wandbereich zusätzlich gerade, beispielsweise axial ausgerichtete, Teilbereiche umfassen, welche zwischen zwei nach radial außen gekrümmten Abschnitten angeordnet sind. Wenn beispielsweise eine Außenwand des Toleranzausgleichselements gerade bzw. zylindrisch ist, ist ein Querschnitt der Wand des Toleranzausgleichselements somit ausgehend von den axialen Enden jeweils zur Mitte hin sich verjüngend ausgebildet. Besonders bevorzugt erstreckt sich der konkave Wandbereich über die gesamte axiale Länge des Toleranzausgleichselements. Insbesondere bewirkt der konkave Wandbereich eine im Vergleich zu umliegenden Bereichen dünnwandigere Ausbildung des Toleranzausgleichselements im Wesentlichen in einem axial mittigen Bereich, wodurch besonders gezielt die radiale Verformung ausgehend vom konkaven Wandbereich beginnt. Durch die Krümmung des konkaven Wandbereichs wird dabei besonders gezielt und auf einfache Weise die radiale Verformbarkeit des Toleranzausgleichselements ermöglicht.

Besonders bevorzugt weist eine Außenwand des Toleranzausgleichselements, wenn dieses in unverformtem Zustand vorliegt, einen zylindrischen Wandbereich auf. Dadurch kann eine besonders einfache und kostengünstige Konstruktion ermöglicht werden. Zudem kann das Toleranzausgleichselement hiermit besonders einfach und genau in die Wandöffnung eingeführt werden.

Vorzugsweise weist eine Außenwand des Toleranzausgleichselements, wenn dieses in unverformtem Zustand vorliegt, einen konvexen Wandbereich auf. Als konvexer Wandbereich wird dabei zumindest ein Abschnitt der Außenwand angesehen, welcher im Längsschnitt des Toleranzausgleichselements gesehen nach radial außen gekrümmt ist. Vorzugsweise kann der konvexe Wandbereich zusätzlich gerade, beispielsweise axial ausgerichtete Teilbereiche umfassen, welche zwischen zwei nach radial außen gekrümmten Abschnitten angeordnet sind. Der konvexe Wandbereich kann beispielsweise als bauchiger Wandbereich angesehen werden. Besonders vorteilhaft ist eine Kombination aus konvexem Wandbereich der Außenwand und konkaven Wandbereich der Innenwand. Diese Geometrie kann auch als Geometrie mit vorgeformter radialer Aufweitung angesehen werden, wodurch die mittels der Verschraubung herbeizuführende radiale Aufweitung besonders gezielt und einfach herbeigeführt werden kann.

Weiter bevorzugt ist das Toleranzausgleichselement so ausgebildet, um sich in Längsrichtung im Wesentlichen mittig aufzuweiten. Das heißt, vorzugsweise führt eine axiale Stauchung zu einer zunehmend bauchigeren Geometrie des Toleranzausgleichselements. Dadurch kann sich ein im Wesentlichen mittig angeordneter Bereich zuerst an die Innenseite der Wandöffnung anlegen. Dadurch kann auch bei unterschiedlichen Größen des Spalts zwischen erster Wand und Antriebseinheit zuverlässig der Kraftschluss durch die Aufweitung des Toleranzausgleichselements hergestellt werden.

Bevorzugt weist das Toleranzausgleichselement an einer der Antriebseinheit abgewandten Seite einen Flansch auf. Als Flansch wird ein Bereich des Toleranzausgleichselements angesehen, welcher einen größeren Außendurchmesser als die restlichen Bereiche aufweist. Vorzugsweise ist der Flansch so ausgebildet, dass dieser sich bei der Verschraubung mittels der Schraube nicht verformt.

Besonders bevorzugt ist das Toleranzausgleichselement so ausgebildet, dass der Flansch eine maximale axiale Stauchung des Toleranzausgleichselements begrenzt, indem der Flansch sich in verschraubtem Zustand an die erste Wand anlegt, vorzugsweise derart, dass die maximale axiale Stauchung zu einer minimalen radialen Aufweitung führt, bei welcher sich das Toleranzausgleichselement zumindest teilweise an die Innenseite der Wandöffnung anlegt. Insbesondere weist das Toleranzausgleichselement somit eine Schaftlänge bis zur Unterseite des Flansches auf, welche so ausgelegt ist, dass der Flansch eine vordefinierte maximale Verformungslänge begrenzt. Insbesondere ist die Schaftlänge dabei größer als eine Summe aus einer Wanddicke der ersten Wand und einer Breite des Spalts. Vorzugsweise beträgt die Verformungslänge mindestens 10 %, vorzugsweise mindestens 30 %, einer axialen Länge des gesamten Toleranzausgleichselements. Der Flansch erlaubt somit eine besonders einfache Montage der Antriebsanordnung, um den gewünschten Verschraubungszustand herzustellen, da beispielsweise die Schraube einfach so weit eingeschraubt wird, bis der Flansch an der ersten Wand anliegt.

Bevorzugt weist die erste Wand einen Absatz auf, insbesondere wobei der Flansch gegen eine axiale Stirnseite des Absatzes anlegbar ist, wenn die Schraube mit dem vordefinierten Anzugsdrehmoment angezogen ist. Der Flansch und der Absatz sind dabei so ausgelegt, um das Toleranzausgleichselement relativ zur Wandöffnung zu Zentrieren. Vorzugsweise ist hierbei eine Passung, insbesondere eine Spielpassung oder eine Übergangspassung, zwischen Flansch und Absatz ausgebildet. Dadurch kann eine besonders einfache und präzise Anordnung des Toleranzausgleichselements in der Wand ermöglicht werden.

Vorzugsweise weist die Antriebseinheit ein Antriebselement und ein Halteblech auf, wobei das Antriebselement und das Halteblech, beispielsweise mittels einer Schraubenverbindung, miteinander verbunden sind. Die Schraube der ersten Halterung ist dabei in das Halteblech eingeschraubt. Vorzugsweise weist das Halteblech eine Gewindemutter auf, in welche die Schraube eingeschraubt ist.

Bevorzugt ist das Toleranzausgleichselement aus Metall, insbesondere Stahl oder Aluminium, gebildet. Somit kann eine besonders einfache und kostengünstige Konstruktion bereitgestellt werden, welche eine zuverlässige und robuste Befestigung der Antriebseinheit an der ersten Wand ermöglicht.

Bevorzugt liegt die Antriebseinheit an der zweiten Wand an, wobei die zweite Halterung eine Schraubenverbindung aufweist. Insbesondere ist die Antriebseinheit mittels der Schraubenverbindung der zweiten Halterung fest mit der zweiten Wand verbunden. Bevorzugt weist die Schraubenverbindung mindestens eine Schraube, vorzugsweise mehrere Schrauben, auf. Durch unmittelbares Anschrauben der Antriebseinheit an der zweiten Wand kann eine besonders einfache und zudem robuste Montage der Antriebsanordnung ermöglicht werden. Vorzugsweise wird beim Zusammenbau der Antriebsanordnung zuerst die Antriebseinheit an die zweite Wand mittels der Schraubenverbindung angeschraubt, wobei anschließend mittels des Toleranzausgleichselements der Spalt zur ersten Wand überbrückt wird.

Bevorzugt weist die Antriebseinheit einen Motor und/oder ein Getriebe auf. Durch die spezielle Anordnung und Halterung zumindest teilweise innerhalb der Rahmenschnittstelle kann eine optimale zuverlässige Verbindung mit vorteilhafter mechanischer Kräfteverteilung bereitgestellt werden, um eine lange Lebensdauer der Antriebseinheit zu ermöglichen. Zudem kann auf einfache und kostengünstige Weise ein niedriges Gewicht der Antriebsanordnung ermöglicht werden.

Weiterhin führt die Erfindung zu einem Fahrzeug, bevorzugt einem mit Muskelkraft und/oder Motorkraft betreibbaren Fahrzeug, vorzugsweise einem Elektrofahrrad, welches die beschriebene Antriebsanordnung umfasst. Die Rahmenschnittstelle ist bevorzugt ein Teil eines Fahrzeugrahmens des Fahrzeugs.

Bevorzugt ist das Toleranzausgleichselement auf einer einem Kettenblatt des Fahrzeugs abgewandten Seite der Antriebseinheit der Antriebsanordnung angeordnet. Das heißt, die zweite Halterung der Antriebsanordnung befindet sich kettenblattseitig der Antriebseinheit. Da im Bereich des Kettenblatts die größten Kräfte auf die Antriebseinheit und die Rahmenschnittstelle wirken, kann somit eine hohe mechanische Belastung des Toleranzausgleichselements vermieden werden. Stattdessen kann, insbesondere bei direkter Verschraubung von Antriebseinheit und zweiter Wand eine besonders direkte und robuste mechanische Anbindung der Antriebseinheit an der Rahmenschnittstelle bereitgestellt werden.

Weiterhin führt die Erfindung zu einem Verfahren zur Montage einer Antriebsanordnung, vorzugsweise der oben beschriebenen Antriebsanordnung. Das Verfahren umfasst die Schritte:
- Positionieren einer Antriebseinheit zumindest teilweise zwischen einer ersten Wand und einer zweiten Wand einer Rahmenschnittstelle,
- Befestigen der Antriebseinheit mittels einer zweiten Halterung an der zweiten Wand,
- Anordnen eines hülsenförmigen Toleranzausgleichselements in einer Wandöffnung der ersten Wand, und
- Verschrauben des Toleranzausgleichselements mittels einer Schraube mit der Antriebseinheit.

Die Schraube wird dabei derart mit einem vordefinierten Anzugsdrehmoment angezogen, dass das Toleranzausgleichselement sich radial aufweitet, mindestens bis es zumindest teilweise an einer Innenseite der Wandöffnung der ersten Wand anliegt. Dadurch bilden das Toleranzausgleichselement und die Schraube eine erste Halterung, welche zur Befestigung der Antriebseinheit an der ersten Wand vorgesehen ist. Das Verfahren erlaubt somit eine besonders einfache Montage der Antriebsanordnung in der Rahmenschnittstelle, wobei bei zuverlässiger Befestigung definierte Belastungszustände, vorzugsweise ein neutraler Belastungszustand oder eine geringe Zugbelastung der Antriebseinheit ermöglicht werden kann.

Bevorzugt weist das Toleranzausgleichselement an einer der Antriebseinheit abgewandten Seite einen Flansch auf. Die Schraube wird dabei mindestens so weit angezogen, bis der Flansch des Toleranzausgleichselements an der ersten Wand anliegt. Zusätzlich wird die Schraube maximal so weit angezogen, bis ein Verhältnis von Anzugsdrehmomentänderung zu Anzugsdrehwinkeländerung einen Wert von mindestens 0,5, vorzugsweise 1, erreicht. Dieses Verhältnis kann dabei als eine Steigung einer Drehmomentkurve bezüglich des Drehwinkels beim Verschrauben angesehen werden. Mit anderen Worten wird die Schraube maximal so weit angezogen, bis sich die Steigung der Drehmomentkurve signifikant erhöht. Dadurch wird einerseits sichergestellt, dass eine ausreichende radiale Verspreizung des Toleranzausgleichselements mit der ersten Wand sichergestellt wird, und andererseits, dass nach dem Anlegen des Flansches keine Zugbeanspruchung der Antriebseinheit herbeigeführt wird durch zu starkes Anziehen der Schraube.

Besonders bevorzugt beträgt das vordefinierte Anzugsdrehmoment maximal 30 Nm, insbesondere maximal 20 Nm.

### Kurze Beschreibung der Zeichnungen

Im Folgenden wird die Erfindung anhand eines Ausführungsbeispiels in Verbindung mit den Figuren beschrieben. In den Figuren sind funktional gleiche Bauteile jeweils mit gleichen Bezugszeichen gekennzeichnet. Dabei zeigt:
- Figur 1: eine Schnittansicht einer Antriebsanordnung gemäß einem bevorzugten Ausführungsbeispiel der Erfindung,
- Figur 2: eine Detail-Schnittansicht der Antriebsanordnung der Figur 1,
- Figur 3: eine Detail-Schnittansicht der Antriebsanordnung der Figur 1 in unverschraubtem Zustand, und
- Figur 4: eine vereinfachte schematische Ansicht eines Drehmomentverlaufs bei einer Verschraubung der Antriebsanordnung der Figur 1.

### Bevorzugte Ausführungsformen der Erfindung

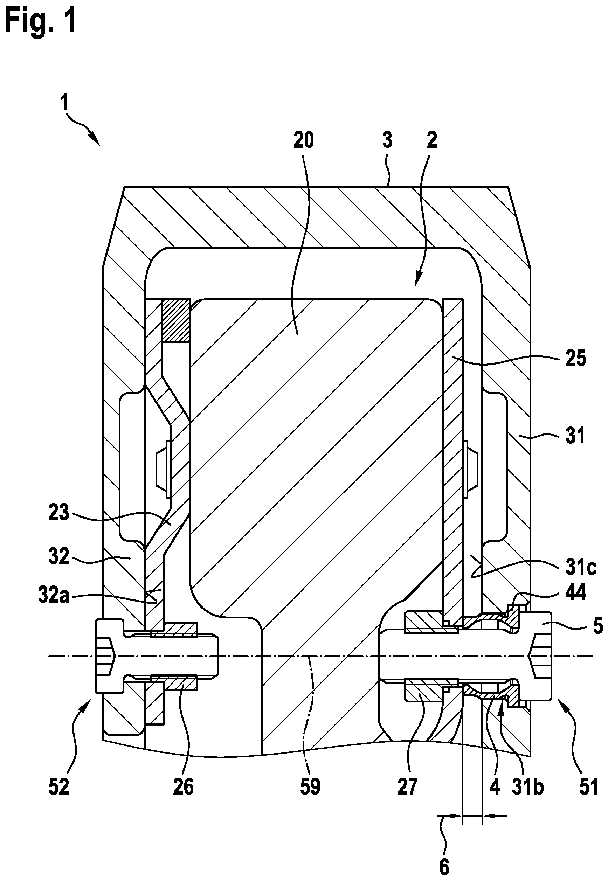

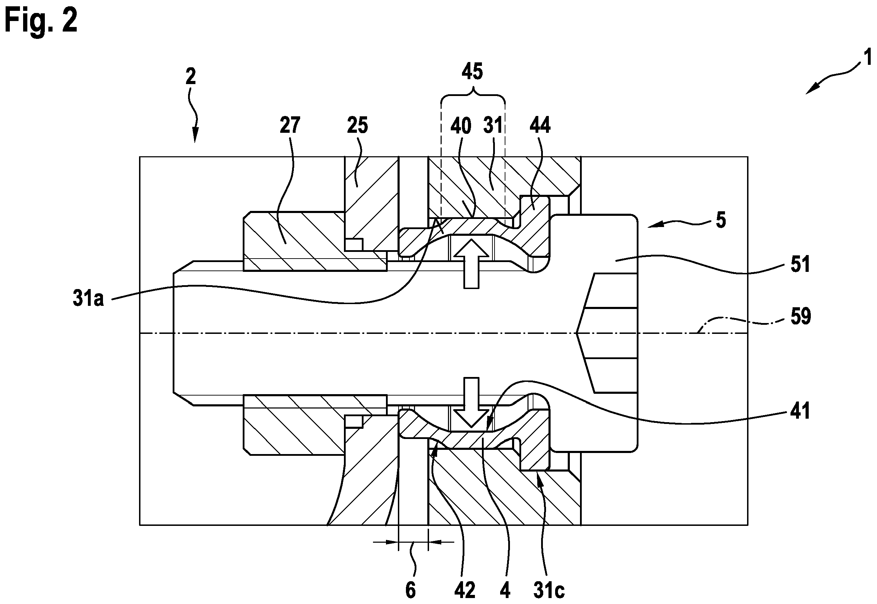

Figur 1 zeigt eine Schnittansicht einer Antriebsanordnung 1 gemäß einem bevorzugten Ausführungsbeispiel der Erfindung. Figur 2 zeigt eine Detail-Schnittansicht der Antriebsanordnung 1 der Figur 1. In den Figuren 1 und 2 ist die Antriebsanordnung in vollständig fertig montierten Zustand dargestellt. Vorzugsweise ist die Antriebsanordnung 1 Teil eines (nicht dargestellten) Elektrofahrrads.

Die Antriebsanordnung 1 umfasst eine (schematisch dargestellte) Antriebseinheit 2, welche ein Antriebselement 20, das einen Motor und ein Getriebe aufweist, und zwei Haltebleche 23, 25 aufweist. Die Antriebseinheit 2 ist innerhalb einer U-förmigen Rahmenschnittstelle 3 aufgenommen. Die Rahmenschnittstelle 3 weist eine erste Wand 31 und eine zweite Wand 32 auf, zwischen welchen die Antriebseinheit 2 angeordnet ist.

Die beiden Haltebleche 23, 25 sind direkt mit dem Antriebselement 20 verschraubt und dienen zur Befestigung an der Rahmenschnittstelle 3. Hierfür weist die Antriebsanordnung 1 eine erste Halterung 51, mittels welcher die Antriebseinheit 2 an der ersten Wand 31 befestigt ist, und eine zweite Halterung 52, mittels welcher die Antriebseinheit 2 an der zweiten Wand 32 befestigt ist, auf.

Die zweite Halterung 52 weist eine Schraubenverbindung mit einer Schraube 52 auf, mittels welcher das erste Halteblech 23 direkt mit der zweiten Wand 32 verschraubt ist. Die Schraube 52 ist dabei in eine Gewindemutter 26 des ersten Halteblechs 23 eingeschraubt. Dabei liegt das erste Halteblech 23, also auch die Antriebseinheit 2 unmittelbar an einer Innenseite 32a der zweiten Wand 32 an.

In der ersten Wand 31 ist eine Wandöffnung 31b als Durchgangsöffnung ausgebildet. Die Wandöffnung 31b ist dabei zweistufig ausgebildet und weist einen Absatz 31c auf.

Durch die Wandöffnung 31b kann eine Schraube 5 der ersten Halterung 51 in die Antriebseinheit 2 geschraubt werden, um die Befestigung der Antriebseinheit 2 an der ersten Wand 31 zu ermöglichen, wie nachfolgend beschrieben.

Die erste Halterung 51 weist dabei ein Toleranzausgleichselement 4 auf. Das Toleranzausgleichselement 4 ist hülsenförmig ausgebildet und durch die Wandöffnung 31b ragend am zweiten Halteblech 25 der Antriebseinheit 2 anliegend angeordnet. Dadurch überbrückt das Toleranzausgleichselement 4 einen Spalt 6 zwischen der ersten Wand 31 und dem zweiten Halteblech 25 der Antriebseinheit 2.

Die Schraube 5 der ersten Halterung 51 ist dabei durch das Toleranzausgleichselement 4 hindurch ragend in eine Gewindemutter 27 des zweiten Halteblechs 25 der Antriebseinheit 2 eingeschraubt.

Die Verschraubung ist dabei derart, dass eine feste Verbindung über die erste Halterung 51, also Toleranzausgleichselement 4 und Schraube 5, zwischen Antriebseinheit 2 und erster Wand 31 sowohl in axialer Richtung als auch radialer Richtung bezüglich einer Schraubenachse 59 vorliegt. Die Verschraubung ist dabei derart ausgelegt, dass eine Zugbeanspruchung der Antriebseinheit 2 zwischen den beiden Wänden 31, 32 der Rahmenschnittstelle 3 vermieden wird. Stattdessen liegt ein neutraler oder geringfügig zugbelasteter Zustand der Antriebseinheit 2 bei vollständiger Verschraubung vor. Dies wird durch die spezielle Ausgestaltung des verformbaren Toleranzausgleichselements 4 erreicht.

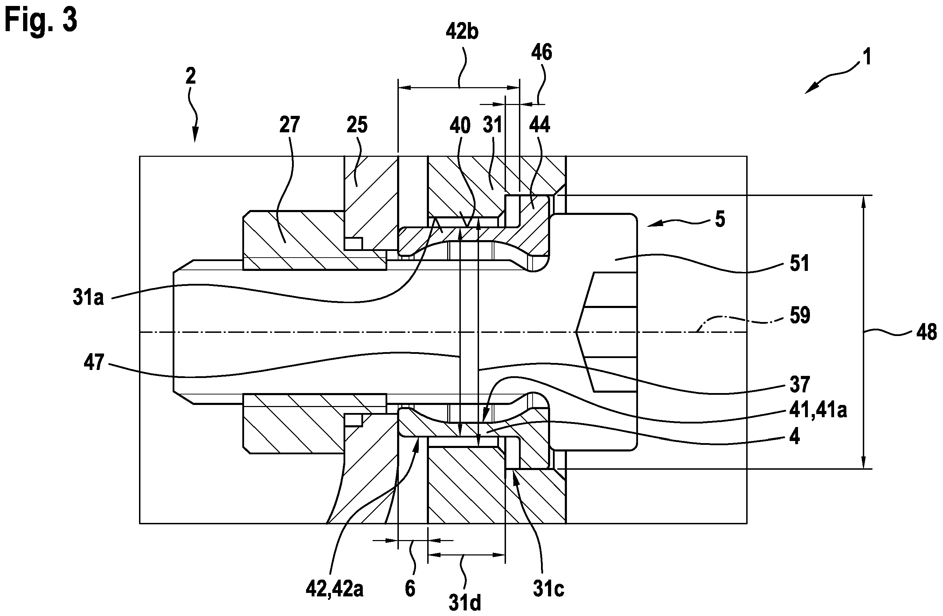

Zur Beschreibung des Toleranzausgleichselements wird zunächst Bezug genommen auf die Figur 3, welche eine Detail-Schnittansicht der Antriebsanordnung der Figuren 1 und 2 in noch nicht verschraubtem und unverformtem Zustand zeigt.

Wie in der Figur 3 zu erkennen, weist das Toleranzausgleichselement 4 eine Außenwand 42 mit einem zylindrischen Wandbereich 42a auf. Ein Außendurchmesser 47 des zylindrischen Wandbereichs 42a ist dabei kleiner, vorzugsweise 5 % bis 10 % kleiner, als ein Innendurchmesser 37 der Wandöffnung 31b, sodass das Toleranzausgleichselement 4 einfach in der Wandöffnung 31b angeordnet werden kann.

An einer der Antriebseinheit 2 abgewandten Seite weist das Toleranzausgleichselement 4 einen Flansch 44 auf, der einen größeren Außendurchmesser 48 als der zylindrische Wandbereich 42a sowie als der Innendurchmesser 37 der Wandöffnung 31b aufweist.

Eine Innenwand 41 des Toleranzausgleichselements 4 weist einen konkaven Wandbereich 41a auf, der sich über eine gesamte axiale Länge des Toleranzausgleichselements 4 erstreckt. Der konkave Wandbereich 41a bewirkt dabei jeweils ausgehend von beiden Stirnseiten eine in axialer Richtung zur Mitte hin abnehmende Wandstärke des Toleranzausgleichselements 4. Dadurch kann sich das Toleranzausgleichselement 4 leichter und gezielter verformen, wenn die Schraube 5 beim Einschrauben nach einer Anlage des Schraubenkopfes 51 am Toleranzausgleichselement 4 weiter angezogen wird.

Im Detail wird nach der Anlage des Schraubenkopfes 51 am Flansch 44 beim weiteren Anziehen der Schraube 5 das Toleranzausgleichselement 4 durch die Verschraubung axial gestaucht. Diese axiale Stauchung führt aufgrund des konkaven Wandbereichs 41a der Innenwand 41 zu einer plastischen Verformung des Toleranzausgleichselements 4 in Form eines radialen Aufweitens zumindest eines Verformungsbereichs 45, wie anhand der Pfeile in Figur 2 angedeutet. Dieser Verformungsbereich 45 liegt in axialer Richtung des Toleranzausgleichselements 4 im Wesentlichen mittig.

Die radiale Aufweitung führt dabei zu einem Anlegen eines Teils einer äußeren Oberfläche 40 des Toleranzausgleichselements 4 an eine Innenseite 31a der Wandöffnung 31b der ersten Wand 31. Das Toleranzausgleichselement 4 wird dabei durch Anziehen der Schraube 5 so weit axial gestaucht, bis der Flansch 44 am Absatz 31c der Wandöffnung 31b anliegt.

Eine Stauchungslänge 46 entspricht dabei einer Differenz aus einer Schaftlänge 42b des zylindrischen Wandbereichs 42a und einer Summe aus Breite des Spalts 6 und Wanddicke 31d bis zum Absatz 31c. Insbesondere sind die Schaftlänge 42b und/oder die Wanddicke 31d dabei speziell so ausgelegt, dass durch ausreichend große Stauchungslänge 46 eine minimale radiale Aufweitung erfolgt, bis die Oberfläche 40 flächig die Innenseite 31a der Wandöffnung 31b berührt, und insbesondere gegen diese gepresst wird. Dadurch wird zum einen ein Kraftschluss, welcher in axialer Richtung wirkt und zum anderen eine spielfreie Anordnung in radialer Richtung erzeugt, sodass die Antriebseinheit 2 mittels der ersten Halterung 51 zuverlässig an der ersten Wand 31 befestigt ist.

Um eine besonders genaue relative Anordnung der Antriebseinheit 2 zur ersten Wand 31 zu erreichen, erfolgt eine präzise Zentrierung der Verschraubung, also von Schraube 5 und Toleranzausgleichselement 4 relativ zur Wandöffnung 31b. Hierfür sind speziell der Flansch 44 des Toleranzausgleichselements 4 und der Absatz 31c der Wandöffnung 31b so ausgelegt, um diese Zentrierung zu erreichen. Im Detail ist hierfür eine Übergangspassung zwischen dem Flansch 44 und dem Absatz 31c ausgebildet.

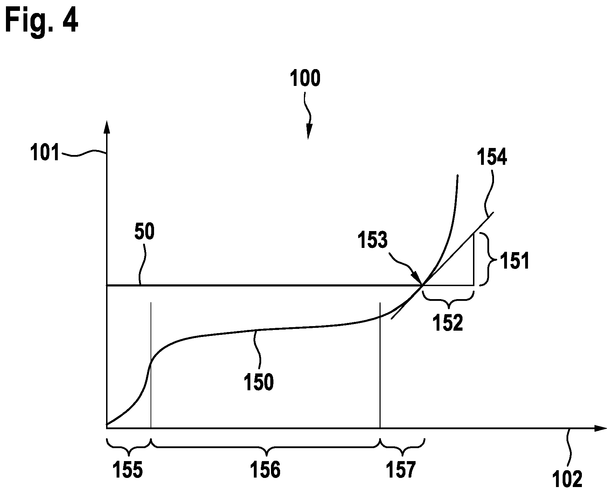

Um ein zuverlässiges Halten der Verschraubung sicherzustellen, wird die Schraube 5 mit einem vordefinierten Anzugsdrehmoment 50 angezogen. Das Anzugsdrehmoment ist dabei speziell ausgelegt und wird nachfolgend in Bezug auf die Figur 4 beschrieben. Figur 4 zeigt dabei eine vereinfachte schematische Ansicht eines Drehmomentverlaufs bei einer Verschraubung der Antriebsanordnung der Figur 1.

Dargestellt ist dabei in Figur 4 ein Diagramm mit einer beispielhaften Drehmomentkurve 150, welche beim Verschrauben ausgehend von einem Zustand, wenn der Schraubenkopf 51 am Toleranzausgleichselement 4 anliegt, wobei das Toleranzausgleichselement 4 noch unverformt ist, wie in Figur 3. Die X-Achse 102 gibt dabei den Drehwinkel in Grad an, wobei die Y-Achse 101 das Drehmoment in Newtonmeter angibt.

Im Bereich 150 erfolgt eine Steigerung des Drehmoments 150 durch den Widerstand des Toleranzausgleichselements 4, in diesem Fall beispielsweise innerhalb des Bereichs einer elastischen Verformung des Toleranzausgleichselements 4. Bei Erhöhung des Drehmoments 150 folgt ein Bereich 156, in welchem die plastische Verformung des Toleranzausgleichselements 4, also die axiale Stauchung und radiale Aufweitung erfolgt. In diesem Bereich 156 nimmt das Drehmoment 150 über einen großen Bereich des Drehwinkels 102 nur gering zu.

Sobald der Flansch 44 am Absatz 31c der ersten Wand 31 anliegt, nimmt die Steigung der Drehmomentkurve 150 signifikant zu, wie in Figur 4 im Bereich 157. Würde eine weitere Verschraubung mit einem hohen Drehmoment erfolgen, so würde nachfolgend die Antriebseinheit 2 auf Zug beansprucht werden. Um eine starke Zugbelastung zu vermeiden und stattdessen vorzugsweise eine neutrale oder nur gering auf Zug beanspruchte Anordnung der Antriebseinheit 2 sicherzustellen, wird die Schraube 5 maximal mit dem vordefinierten Anzugsdrehmoment 50 angezogen. Das Anzugsdrehmoment 50 ist dabei erreicht, wenn die Drehmomentkurve 150 eine Steigung 154 von 1 erreicht. Dies ist dann der Fall, wenn, wie schematisch angedeutet, ein Verhältnis von Anzugsdrehmomentänderung 151 zu Anzugsdrehwinkeländerung 152 gleich 1 ist. Bevorzugt liegt hierbei das Anzugsdrehmoment 50, beispielsweise bei der Verwendung einer M8-Schraube, bei etwa 20 Nm.

## Patentansprüche

1. Antriebsanordnung eines, insbesondere mit Muskelkraft und/oder Motorkraft betreibbaren, Fahrzeugs, umfassend:
- eine Antriebseinheit (2),
- eine Rahmenschnittstelle (3), wobei die Antriebseinheit (2) zumindest teilweise zwischen einer ersten Wand (31) und einer zweiten Wand (32) der Rahmenschnittstelle (3) angeordnet ist,
- eine erste Halterung (51), welche die Antriebseinheit (2) an der ersten Wand (31) hält, und
- eine zweite Halterung (52) welche die Antriebseinheit (2) an der zweiten Wand (32) hält,
wobei die erste Halterung (51) eine Schraube (5) und ein hülsenförmiges Toleranzausgleichselement (4) aufweist,
wobei das Toleranzausgleichselement (4) zumindest teilweise innerhalb einer Wandöffnung (31b) der ersten Wand (31) und an der Antriebseinheit (2) anliegend angeordnet und mittels der Schraube (5) mit der Antriebseinheit (2) verschraubt ist, und
wobei das Toleranzausgleichselement (4) so ausgebildet ist, um sich durch die Verschraubung radial aufzuweiten, um zumindest teilweise an einer Innenseite (31a) der Wandöffnung (31b) anzuliegen, wenn die Schraube (5) mit einem vordefinierten Anzugsdrehmoment (50) angezogen ist.

2. Antriebsanordnung nach Anspruch 1, wobei eine Innenwand (41) des Toleranzausgleichselements (4) in unverformtem Zustand einen konkaven Wandbereich (41a) aufweist.

3. Antriebsanordnung nach einem der vorhergehenden Ansprüche, wobei eine Außenwand (42) des Toleranzausgleichselements (4) in unverformtem Zustand einen zylindrischen Wandbereich (42a) aufweist.

4. Antriebsanordnung nach einem der Ansprüche 1 oder 2, wobei eine Außenwand (42) des Toleranzausgleichselements (4) in unverformtem Zustand einen konvexen Wandbereich (42a) aufweist.

5. Antriebsanordnung nach einem der vorhergehenden Ansprüche, wobei das Toleranzausgleichselement (4) so ausgebildet ist, um sich in Längsrichtung im Wesentlichen mittig aufzuweiten.

6. Antriebsanordnung nach einem der vorhergehenden Ansprüche, wobei das Toleranzausgleichselement (4) an einer der Antriebseinheit (2) abgewandten Seite einen Flansch (44) aufweist.

7. Antriebsanordnung nach Anspruch 6, wobei das Toleranzausgleichselement (4) so ausgebildet ist, dass der Flansch (44) durch Anlegen an die erste Wand (31) in verschraubtem Zustand eine maximale axiale Stauchung des Toleranzausgleichselements (4) begrenzt.

8. Antriebsanordnung nach einem der Ansprüche 6 oder 7, wobei die erste Wand (31) einen Absatz (31c) aufweist, und wobei der Flansch (44) und der Absatz (31c) so ausgelegt sind, um das Toleranzausgleichselement (4) relativ zur Wandöffnung (31b) zu zentrieren.

9. Antriebsanordnung nach einem der vorhergehenden Ansprüche, wobei die Antriebseinheit (2) ein Antriebselement (20) und ein Halteblech (25), insbesondere mit einer Gewindemutter (27), aufweist, wobei das Antriebselement (20) und das Halteblech (25) miteinander verbunden sind, und wobei die Schraube (5) der ersten Halterung (51) in das Halteblech (25) eingeschraubt ist.

10. Antriebsanordnung nach einem der vorhergehenden Ansprüche, wobei das Toleranzausgleichselement (4) aus Metall, insbesondere Stahl oder Aluminium, gebildet ist.

11. Antriebsanordnung nach einem der vorhergehenden Ansprüche, wobei die Antriebseinheit (2) an der zweiten Wand (32) anliegt, und wobei die zweite Halterung (52) eine Schraubenverbindung aufweist.

12. Fahrzeug, insbesondere mit Muskelkraft und/oder Motorkraft betreibbares Fahrzeug, vorzugsweise Elektrofahrrad, umfassend eine Antriebsanordnung (1) nach einem der vorhergehenden Ansprüche.

13. Verfahren zur Montage einer Antriebsanordnung (1), insbesondere nach einem der vorhergehenden Ansprüche, umfassend die Schritte:
- Positionieren einer Antriebseinheit (2) zumindest teilweise zwischen einer ersten Wand (31) und einer zweiten Wand (32) einer Rahmenschnittstelle (3),
- Befestigen der Antriebseinheit (2) mittels einer zweiten Halterung (52) an der zweiten Wand (32),
- Anordnen eines hülsenförmigen Toleranzausgleichselements (4) in einer Wandöffnung (31b) der ersten Wand (31), und
- Verschrauben des Toleranzausgleichselements (4) mittels einer Schraube (5) mit der Antriebseinheit (2),
wobei die Schraube (5) derart mit einem vordefinierten Anzugsdrehmoment (50) angezogen wird, dass das Toleranzausgleichselement (4) sich radial aufweitet, mindestens bis es zumindest teilweise an einer Innenseite (31a) der Wandöffnung (31b) anliegt, sodass das Toleranzausgleichselement (4) und die Schraube (5) eine erste Halterung (51) zur Befestigung der Antriebseinheit (2) an der ersten Wand (31) bilden.

14. Verfahren nach Anspruch 13, wobei das Toleranzausgleichselement (4) an einer der Antriebseinheit (2) abgewandten Seite einen Flansch (44) aufweist, und wobei die Schraube (5) mindestens so weit angezogen wird, bis der Flansch (44) an der ersten Wand (31) anliegt, und wobei die Schraube (5) maximal so weit angezogen wird, bis ein Verhältnis von Anzugsdrehmomentänderung (151) zu Anzugsdrehwinkeländerung (152) einen Wert von mindestens 0,5, insbesondere 1, erreicht.

15. Verfahren nach Anspruch 13 oder 14, wobei das vordefinierte Anzugsdrehmoment maximal 30 Nm, insbesondere maximal 20 Nm, beträgt.

## Claims

1. Drive arrangement of a vehicle which can be operated, in particular, by muscle power and/or motor power, comprising:
- a drive unit (2),
- a frame interface (3), wherein the drive unit (2) is arranged at least partially between a first wall (31) and a second wall (32) of the frame interface (3),
- a first bracket (51) which holds the drive unit (2) on the first wall (31), and
- a holder (52) which holds the drive unit (2) on of the second wall (32),
wherein the first bracket (51) comprises a screw (5) and a sleeve-shaped tolerance compensation element (4),
wherein the tolerance compensation element (4) is arranged at least partially within a wall opening (31b) of the first wall (31) and so as to bear against the drive unit (2), and is screwed to the drive unit (2) by means of the screw (5), and
wherein the tolerance compensation element (4) is designed so as to widen radially as a result of the screw connection in order to at least partially bear against an inner side (31a) of the wall opening (31b) when the screw (5) is tightened with a predefined tightening torque (50).

2. Drive arrangement according to Claim 1, wherein an inner wall (41) of the tolerance compensation element (4) has a concave wall region (41a) in the undeformed state.

3. Drive arrangement according to either of the preceding claims, wherein an outer wall (42) of the tolerance compensation element (4) has a cylindrical wall region (42a) in an undeformed state.

4. Drive arrangement according to either of Claims 1 or 2, wherein an outer wall (42) of the tolerance compensation element (4) has a convex wall region (42a) in an undeformed state.

5. Drive arrangement according to one of the preceding claims, wherein the tolerance compensation element (4) is designed so as to widen substantially centrally in the longitudinal direction.

6. Drive arrangement according to one of the preceding claims, wherein the tolerance compensation element (4) has a flange (44) on one side facing away from the drive unit (2).

7. Drive arrangement according to Claim 6, wherein the tolerance compensation element (4) is designed in such a way that, by bearing against the first wall (31) in the screwed state, the flange (44) limits a maximum axial compression of the tolerance compensation element (4).

8. Drive arrangement according to either of Claims 6 or 7, wherein the first wall (31) has a shoulder (31c), and wherein the flange (44) and the shoulder (31c) are designed to centre the tolerance compensation element (4) relative to the wall opening (31b).

9. Drive arrangement according to one of the preceding claims, wherein the drive unit (2) has a drive element (20) and a holding plate (25), in particular with a threaded nut (27), wherein the drive element (20) and the holding plate (25) are connected to each other, and wherein the screw (5) of the first bracket (51) is screwed into the holding plate (25).

10. Drive arrangement according to one of the preceding claims, wherein the tolerance compensation element (4) is made of metal, in particular steel or aluminium.

11. Drive arrangement according to one of the preceding claims, wherein the drive unit (2) bears against the second wall (32), and wherein the second bracket (52) has a screw connection.

12. Vehicle, in particular vehicle which can be operated by muscle power and/or motor power, preferably electric bicycle, comprising a drive arrangement (1) according to one of the preceding claims.

13. Method for assembling a drive arrangement (1), in particular according to one of the preceding claims, comprising the steps:
- positioning a drive unit (2) at least partially between a first wall (31) and a second wall (32) of a frame interface (3),
- fastening the drive unit (2) to the second wall (32) by means of a second bracket (52),
- arranging a sleeve-shaped tolerance compensation element (4) in a wall opening (31b) of the first wall (31), and
- screwing the tolerance compensation element (4) to the drive unit (2) by means of a screw (5),
wherein the screw (5) is tightened with a predefined tightening torque (50) in such a way that the tolerance compensation element (4) widens radially at least until it bears at least partially against an inner side (31a) of the wall opening (31b), with the result that the tolerance compensation element (4) and the screw (5) form a first bracket (51) for fastening the drive unit (2) to the first wall (31).

14. Method according to Claim 13, wherein the tolerance compensation element (4) has a flange (44) on one side facing away from the drive unit (2), and wherein the screw (5) is tightened at least until the flange (44) bears against the first wall (31), and wherein the screw (5) is tightened at most until a ratio of change in tightening torque (151) to change in tightening angle of rotation (152) reaches a value of at least 0.5, in particular 1.

15. Method according to Claim 13 or 14, wherein the predefined tightening torque is at most 30 Nm, in particular at most 20 Nm.

## Revendications

1. Agencement d'entraînement d'un véhicule pouvant fonctionner en particulier à l'aide d'une force musculaire et/ou d'une puissance motrice, comprenant :
- une unité d'entraînement (2),
- une interface (3) avec un châssis, l'unité d'entraînement (2) étant agencée au moins partiellement entre une première paroi (31) et une deuxième paroi (32) de l'interface (3) avec un châssis,
- une première fixation (51), qui fixe l'unité d'entraînement (2) à la première paroi (31) et
- une deuxième fixation (52), qui fixe l'unité d'entraînement (2) à la deuxième paroi (32).
la première fixation (51) présentant une vis (5) et un élément de compensation de tolérance (4) en forme de manchon,
l'élément de compensation de tolérance (4) étant agencé au moins en partie dans une ouverture (31b) de paroi de la première paroi (31) et contre l'unité de d'entraînement (2) et vissé au moyen de la vis (5) à l'unité d'entraînement (2) et
l'élément de compensation de tolérance (4) étant conçu de façon à s'élargir radialement par le vissage, pour se placer au moins partiellement contre la face interne (31a) de l'ouverture (31b) de paroi lorsque la vis (5) est serrée à l'aide d'un couple de serrage (50) prédéfini.

2. Agencement d'entraînement selon la revendication 1, une paroi interne (41) de l'élément de compensation de tolérance (4) présentant, dans l'état non déformé, une zone de paroi (41a) concave.

3. Agencement d'entraînement selon l'une des revendications précédentes, une paroi externe (42) de l'élément de compensation de tolérance (4) présentant, dans l'état non déformé, une zone de paroi (42a) cylindrique.

4. Agencement d'entraînement selon l'une des revendications 1 ou 2, une paroi externe (42) de l'élément de compensation de tolérance (4) présentant, dans l'état non déformé, une zone de paroi (42a) convexe.

5. Agencement d'entraînement selon l'une des revendications précédentes, l'élément de compensation de tolérance (4) étant conçu de façon à s'élargir essentiellement au centre dans la direction longitudinale.

6. Agencement d'entraînement selon l'une des revendications précédentes, l'élément de compensation de tolérance (4) présentant une bride (44) sur une face orientée à l'opposé de l'unité d'entraînement (2).

7. Agencement d'entraînement selon la revendication 6, l'élément de compensation de tolérance (4) étant conçu de telle sorte que la bride (44) limite un écrasement axial maximal de l'élément de compensation de tolérance (4) par le placement contre la première paroi (31) dans l'état vissé.

8. Agencement d'entraînement selon l'une des revendications précédentes 6 ou 7, la première paroi (31) présentant un épaulement (31c) et la bride (44) et l'épaulement (31c) étant conçus de façon à centrer l'élément de compensation de tolérance (4) par rapport à l'ouverture (31b) de paroi.

9. Agencement d'entraînement selon l'une des revendications précédentes, l'unité d'entraînement (2) présentant un élément d'entraînement (20) et une tôle de fixation (25), présentant en particulier un écrou fileté (27), l'élément d'entraînement (20) et la tôle de fixation (25) étant reliés l'un à l'autre et la vis (5) de la première fixation (51) étant vissée dans la tôle de fixation (25).

10. Agencement d'entraînement selon l'une des revendications précédentes, l'élément de compensation de tolérance (4) étant en métal, en particulier en acier ou en aluminium.

11. Agencement d'entraînement selon l'une des revendications précédentes, l'unité d'entraînement (2) étant placée contre la deuxième paroi (32) et la deuxième fixation (52) présentant une liaison vissée.

12. Véhicule, en particulier véhicule pouvant fonctionner à l'aide d'une force musculaire et/ou d'une puissance motrice, de préférence bicyclette électrique, comprenant un agencement d'entraînement (1) selon l'une des revendications précédentes.

13. Procédé de montage d'un agencement d'entraînement (1), en particulier selon l'une des revendications précédentes, comprenant les étapes :
- positionnement d'une unité d'entraînement (2) au moins partiellement entre une première paroi (31) et une deuxième paroi (32) d'une interface (3) avec un châssis,
- fixation de l'unité d'entraînement (2) au moyen d'une deuxième fixation (52) à la deuxième paroi (32),
- agencement d'un élément de compensation de tolérance (4) sous forme de manchon dans une ouverture (31b) de paroi de la première paroi (31) et
- vissage de l'élément de compensation de tolérance (4) à l'aide d'une vis (5) à l'unité d'entraînement (2),
la vis (5) étant serrée à un couple de serrage (50) prédéfini de telle sorte que l'élément de compensation de tolérance (4) s'élargit radialement, au moins jusqu'à ce qu'il se place au moins en partie contre une face interne (31a) de l'ouverture (31b) de paroi de telle sorte que l'élément de compensation de tolérance (4) et la vis (5) forment une première fixation (51) pour la fixation de l'unité d'entraînement (2) à la première paroi (31).

14. Procédé selon la revendication 13, l'élément de compensation de tolérance (4) présentant, sur une face orientée à l'opposé de l'unité d'entraînement (2), une bride (44) et la vis (5) étant serrée au moins jusqu'à ce que la bride (44) se place contre la première paroi (31) et la vis (5) étant serrée au maximum jusqu'à ce qu'un rapport de la modification du couple de serrage (151) à la modification de l'angle se serrage (152) atteigne une valeur d'au moins 0,5, en particulier de 1.

15. Procédé selon la revendication 13 ou 14, le couple de serrage prédéfini étant d'au maximum 30 Nm, en particulier d'au maximum 20 Nm.
